# EUROPÄISCHE PATENTSCHRIFT

(11) **EP 1 163 175 B1**
(45) Veröffentlichungstag und Bekanntmachung des Hinweises auf die Patenterteilung: **16.07.2003**
(21) Anmeldenummer: 00908894.9
(22) Anmeldetag: 20.03.2000
(51) Int. Cl.: B65G 9/00, B65G 35/08

(54) **VERFAHREN ZUR FÖRDERUNG VON STÜCKGUT UND FÖRDERSYSTEM ZUR DURCHFÜHRUNG DES VERFAHRENS**
METHOD FOR CONVEYING UNIT LOADS AND CONVEYOR SYSTEM FOR IMPLEMENTING SAID METHOD
PROCEDE POUR TRANSPORTER DES MATIERES EN VRAC ET SYSTEME DE TRANSPORT POUR METTRE EN OEUVRE LEDIT PROCEDE

(30) Priorität: 24.03.1999 CH 55799
(43) Veröffentlichungstag der Anmeldung: 19.12.2001
(73) Patentinhaber: IPT Weinfelden AG, 8570 Weinfelden (CH)
(72) Erfinder: MÜLLER, Beat, CH-8561 Ottoberg (CH)
(74) Vertreter: Frei, Alexandra Sarah
(86) Internationale Anmeldenummer: CH0000157
(87) Internationale Veröffentlichungsnummer: WO00056639

(56) Entgegenhaltungen:
- EP-A- 0 107 533
- FR-A- 453 962
- US-A- 2 424 055
- US-A- 4 558 830
- US-A- 5 304 027

## Beschreibung

Die Erfindung liegt auf dem Gebiete der Fördertechnik und betrifft ein Förderverfahren und ein Fördersystem nach den Oberbegriffen der entsprechenden, unabhängigen Patentansprüche. Verfahren und System dienen zur Stückgutförderung mit Wechsel zwischen serieller zu paralleler Förderung. Unter Stückgut soll im Folgenden eine grosse Zahl von Gegenständen verstanden werden, die einzeln oder in kleinen Gruppen in definierten Positionen gefördert und gegebenenfalls bearbeitet und/oder gepuffert werden und die alle gleich oder einander mindestens derart ähnlich sind, dass sie alle mit denselben Mitteln gefördert und zur Förderung und Bearbeitung gehalten werden können.

Stückgut wird zur Bearbeitung zu Bearbeitungsstationen zugefördert und nach der Bearbeitung von Bearbeitungsstationen weggefördert. Zur Bearbeitung von Stückgut werden Bearbeitungsmittel eingesetzt, die entweder im wesentlichen stationär sind, so dass die Förderung der Gegenstände für die Bearbeitung unterbrochen wird, oder mit den geförderten Gegenständen mitbewegen, so dass eine unterbruchslose, kontinuierliche Förderung möglich ist.

Vielfach werden zur Erhöhung des Durchsatzes für derartige Stückgutbearbeitungen Reihen von identischen Bearbeitungsmitteln eingesetzt, mit denen je eine Mehrzahl von Gegenständen gleichzeitig (zeitlich parallel) bearbeitet wird.

Eine derartige Reihe von parallel betriebenen Bearbeitungsmitteln kann parallel zu einer Förderstrecke angeordnet sein, auf welcher Förderstrecke die Gegenstände seriell, das heisst im wesentlichen einzeln hintereinander gefördert werden. Der Betrieb einer derartigen Anordnung erfolgt in Bearbeitungstakten, in denen je eine Gruppe von Gegenständen bearbeitet wird, und mit den Bearbeitungstakten alternierenden Fördertakten, in denen die im vorangehenden Bearbeitungstakt bearbeiteten Gegenstände aus dem Bereich der Bearbeitungsmittel gefördert werden und zu bearbeitende Gegenstände in den Bereich der Bearbeitungsmittel gefördert werden. Für die Bearbeitung mit Hilfe einer zur Förderstrecke parallelen Reihe von Bearbeitungsmitteln werden die Gegenstände lediglich seriell gefördert. Die Länge der Bearbeitungstakte ist dabei von der durchzuführenden Bearbeitung, die Länge der Fördertakte von der Anzahl der gleichzeitig bearbeiteten Gegenstände abhängig. Derartige Parallelbearbeitungen mit serieller Förderung sind beispielsweise üblich, wenn das Stückgut mittels Förderkette gefördert wird, wobei an der Förderkette zum Halten von Gegenständen äquidistante Haltemittel angeordnet sind.

Wenn die Gegenstände für eine zeitlich parallele Bearbeitung auch örtlich parallel, das heisst auf verschiedene im wesentlichen parallel-laufende Förderwege verteilt gefördert werden, das heisst, wenn die Reihe von zeitlich parallel betriebenen Bearbeitungsmitteln im wesentlichen quer zur allgemeinen Förderrichtung angeordnet ist, werden die mit den Bearbeitungstakten alternierenden Fördertakte gegenüber der oben genannten Methode kürzer, das heisst, der Durchsatz wird entsprechend höher. Es ist aber eine aufwendigere Fördervorrichtung zur Verfügung zu stellen, insbesondere dann, wenn die Parallelförderung nur in bestimmten Bereichen vorteilhaft, in anderen Bereichen aber eine serielle Förderung gewünscht wird, so dass Mittel zum Wechseln der Förderart (seriell/parallel) vorgesehen werden müssen. Derartige Mittel sind beispielsweise Verteil- und Zusammenführweichen, mit deren Hilfe ein serieller Förderstrom von Gegenständen in parallele Teilströme aufgeteilt wird bzw. eine Mehrzahl von parallelen Teilströmen zu einem seriellen Förderstrom zusammengeführt wird. Für derartige Förderverfahren sind Förderketten mit Haltemittel nur anwendbar, wenn die Gegenstände bei den Weichen entsprechend übergeben werden. Einfacher werden die Gegenstände in derartigen Anwendungen durch geeignete Führungsmittel geführt beispielsweise auf Transportbändern gefördert und müssen dann zur exakten Positionierung in Bearbeitungsstationen meist von entsprechend ausgebildeten Haltemitteln übernommen und für die Bearbeitung in einer vorgegebenen Halteposition gehalten werden.

Der Wechsel zwischen serieller Förderung und paralleler Förderung mit Hilfe von Verteil- und Zusammenführweichen ist auch durchführbar in Fördersystemen mit schienenartigen Führungsmitteln und mit einer Vielzahl von voneinander unabhängigen Fördermitteln, die je einen Gegenstand oder eine kleine Gruppe von Gegenständen gehalten fordern und auf den schienenartigen Führungsmitteln individuell verfahrbar sind. In derartigen Fördersystemen fallen die Übergaben der Produkte an den Weichenstellen weg, es bleiben aber die aufwendigen und viel Platz beanspruchenden Weichen und parallelen Schienenführungen, die auch in einem derartigen System für Wechsel zwischen serieller und paralleler Förderung nach dem Stande der Technik erforderlich sind.

Weitere, bekannte Methoden für den Wechsel zwischen serieller und paralleler Förderung bestehen darin, Haltemittel für je eine Reihe von Gegenständen vorzusehen, welche Haltemittel entweder derart gefördert werden, dass die Reihe parallel zur Förderrichtung gerichtet ist (serielle Förderung) oder im wesentlichen quer dazu (parallele Förderung). Dabei sind die Haltemittel entweder drehbar auf entsprechenden Fördermitteln angeordnet oder es sind für die serielle und parallele Förderung entsprechend verschiedene Schienen vorgesehen, wie dies beispielsweise in der Publikation DE-19717352 beschrieben ist. Durch die Verwendung derartiger Haltemittel kann zwar bei paralleler Förderung gegenüber serieller Förderung ohne viel Aufwand ein erhöhter Durchsatz erreicht werden, können aber im gleichen System die Gegenstände nicht ohne zusätzliche Mittel für eine einzelne Handhabung aus den Reihen herausgelöst werden.

Die Erfindung stellt sich nun die Aufgabe, ein Verfahren zur Stückgutförderung in einem Fördersystem mit schienenartigen Führungsmitteln und auf den schienenartigen Führungsmitteln unabhängig voneinander verfahrbaren Fördermitteln zur gehaltenen Förderung von einzelnen Gegenständen oder von kleinen Gruppen von Gegenständen aufzuzeigen, welches Verfahren beliebige Wechsel zwischen serieller und paralleler Förderung erlaubt. Das Verfahren soll insbesondere im gleichen System parallele Förderung mit verschiedenen Anzahlen von parallel geförderten Gegenständen ermöglichen, es soll Übergaben der Gegenstände möglichst vermeiden und trotzdem einfach, möglichst generell anwendbar und mit möglichst wenigen und einfachen Mitteln realisierbar sein. Es ist ferner die Aufgabe der Erfindung, ein Fördersystem zur Durchführung des Verfahrens zu schaffen.

Diese Aufgabe wird gelöst durch das Verfahren zur Stückgutförderung und durch das Fördersystem zur Durchführung des Verfahrens, wie sie in den entsprechenden, unabhängigen Patentansprüchen definiert sind.

Im erfindungsgemässen Verfahren wird in einem Fördersystem mit schienenartigen Führungsmitteln und mit auf den schienenartigen Führungsmitteln unabhängig voneinander verfahrbaren Fördermitteln ein Wechsel von serieller zu paralleler Förderung realisiert dadurch, dass ein verschiebbares Schienenstück in eine erste Position gebracht wird, in der es an ein weiteres, im wesentlichen stationäres Schienenstück anschliesst, dass eine Mehrzahl von Fördermitteln seriell über das stationäre Schienenstück auf das verschiebbare Schienenstück gefördert wird, dass die Mehrzahl von Födermitteln auf dem verschiebbaren Schienenstück blockiert wird und dass das verschiebbare Schienenstück mit den darauf blockierten Fördermitteln im wesentlichen quer zur Förderrichtung der seriellen Förderung, also im wesentlichen quer zu seiner Länge verschoben wird, was für die auf dem Schienenstück blockierten Fördermittel einer parallelen Förderung gleichkommt.

Für einen Wechsel von dieser parallelen Förderung zurück zu serieller Förderung wird das verschiebbare Schienenstück in einer weiteren Verschiebung im wesentlichen quer zu seiner Länge in eine zweite Position gebracht, in der es wiederum an ein im wesentlichen stationäres Schienenstück anschliesst, werden die Fördermittel auf dem verschiebbaren Schienenstück entblockiert und in serieller Förderung über das stationäre Schienenstück vom verschiebbaren Schienenstück weggefördert (serielle Förderung).

Die Fördermittel, deren Förderung nach dem erfindungsgemässen Verfahren teils seriell, teils parallel verläuft, sind beispielsweise mit Haltemitteln zur gehaltenen Förderung von Gegenständen ausgerüstet und tragen beim Wechsel von der seriellen zur parallelen Förderung beispielsweise zu bearbeitende Gegenstände. Die Gegenstände werden dann während der parallelen Förderung bearbeitet und die Fördermittel tragen bearbeitete Gegenstände, wenn wieder von paralleler zu serieller Förderung übergegangen wird. Ein vorübergehender Wechsel von serieller Förderung zu paralleler Förderung nach dem erfindungsgemässen Verfahren kann auch für eine parallele Beladung bzw. Entladung der Fördermittel oder für eine Pufferung oder Zwischenlagerung von Fördermitteln bzw. Gegenständen angewendet werden.

Wichtige Vorteile des erfindungsgemässen Fördersystems bestehen darin, dass innerhalb desselben Fördersystems ohne Mehraufwand verschiedene Bereiche mit Parallelförderung mit verschiedenen Zahlen von parallelen Förderwegen realisiert werden können und dass die Fördermittel in Bereichen mit serieller Förderung voneinander völlig unabhängig sind.

Wenn die Fördermittel auf dem verschiebbaren Schienenstück in vorgegebenen Positionen blockiert werden, sind die Positionen der Gegenstände für eine Bearbeitung während der Parallelförderung in definierten Positionen gehalten und müssen nicht übergeben werden. Eine einfache Art zur Blockierung der Fördermittel auf dem verschiebbaren Schienenstück besteht darin, die maximal mögliche Zahl von Fördermitteln auf das Schienenstück zu fördern und die beiden Enden des Schienenstücks zu schliessen. Die Fördermittel auf dem verschiebbaren Schienenstück halten sich dann gegenseitig in einer definierten Position fest.

Nach einer bevorzugten Ausführungsform des erfindungsgemässen Verfahrens werden für die parallele Förderung eine Mehrzahl von gleichen, verschiebbaren Schienenstücken verwendet, die nacheinander in die erste Position gebracht, mit Fördermitteln beladen und dann im wesentlichen hintereinander und im wesentlichen quer zur seriellen Förderrichtung verschoben werden. Nach einer weiteren, vorteilhaften Ausführungsform des erfindungsgemässen Verfahrens werden die verschiebbaren Schienenstücke auf einem in sich geschlossenen Verschiebeweg verschoben und ist die erste Position dieselbe Position wie die zweite, das heisst eine Position, in der auf beiden Seiten des verschiebbaren Schienenstücks ein stationäres Schienenstück anschliesst. In einer derartigen Ausführungsform wird eine Gruppe von Fördermitteln auf einem verschiebbaren Schienenstück dadurch ausgetauscht, dass die auf dem verschiebbaren Schienenstück positionierte Gruppe von einer neuen Gruppe weggeschoben wird.

Für die genannten, bevorzugten Ausführungsformen des erfindungsgemässen Verfahrens eignen sich insbesondere Fördersysteme, deren Schienen und Fördermittel derart ausgebildet sind, dass Förderung in jeder relativen Lage der Fördermittel zu den Schienen möglich ist. Ein derartiges Fördersystem und Teile davon sind beispielsweise beschrieben in den Publikationen EP-0387318 (oder US-5074678, F270), EP-0870934 (F453) oder WO-98/23509 (F444) derselben Anmelderin.

Das Fördersystem zur Durchführung des erfindungsgemässen Verfahrens weist schienenartige Führungsmittel und auf den schienenartigen Führungsmitteln unabhängig voneinander verfahrbare Fördermittel zur gehaltenen Förderung von einzelnen Gegenständen oder von kleinen Gegenstandsgruppen auf, wobei mindestens ein Schienenstück im wesentlichen quer zu seiner Länge verschiebbar ist in eine Position, in der es an ein im wesentlichen stationäres Schienenstück anschliesst und aus einer derartigen Position heraus. Vorteilhafterweise weist das Fördersystem eine Mehrzahl von verschiebbaren Schienenstücken auf, die auf einem in sich geschlossenen Verschiebeweg hintereinander verschiebbar sind, wobei in mindestens einer der Verschiebepositionen an das verschiebbare Schienenstück ein stationäres Schienenstück anschliesst.

Ein Mittel zur Verschiebung einer Mehrzahl von Schienenstücken auf einem in sich geschlossenen Verschiebeweg ist beispielsweise eine um eine Rotationsachse drehbar angetriebene Schienenanordnung, in der eine Mehrzahl von verschiebbaren Schienenstücken parallel zur Rotationsachse und mit gleichen Abständen von dieser und voneinander angeordnet sind, wobei die Schienenanordnung derart im Fördersystem integriert ist, dass ihre Rotationsachse parallel zur Richtung der seriellen Förderung ausgerichtet ist.

Das erfindungsgemässe Verfahren zur Stückgutförderung und das Fördersystem zur Durchführung des Verfahrens werden anhand der folgenden Figuren mehr im Detail beschrieben. Dabei zeigen:
- **Figur 1**: ein allgemeines Schema zur Illustration der aufeinanderfolgenden Schritte des erfindungsgemässen Verfahrens;
- **Figur 2**: eine schematische Darstellung einer beispielhaften Ausführungsform des erfindungsgemässen Fördersystems mit vier parallelen, verschiebbaren Schienenstücken, die auf einem kreisförmigen Verschiebeweg verschiebbar sind (Blickwinkel quer zur Förderrichtung der seriellen Förderung);
- **Figur 3**: eine schematische Darstellung einer weiteren, beispielhaften Ausführungsform des erfindungsgemässen Fördersystems mit zwei parallelen, auf einem kreisförmigen Verschiebeweg verschiebbaren Schienenstücken (Blickwinkel parallel zur Förderrichtung der seriellen Förderung);
- **Figur 4**: ein Beispiel von Schienen und Fördermitteln für das erfindungsgemässe Fördersystem.

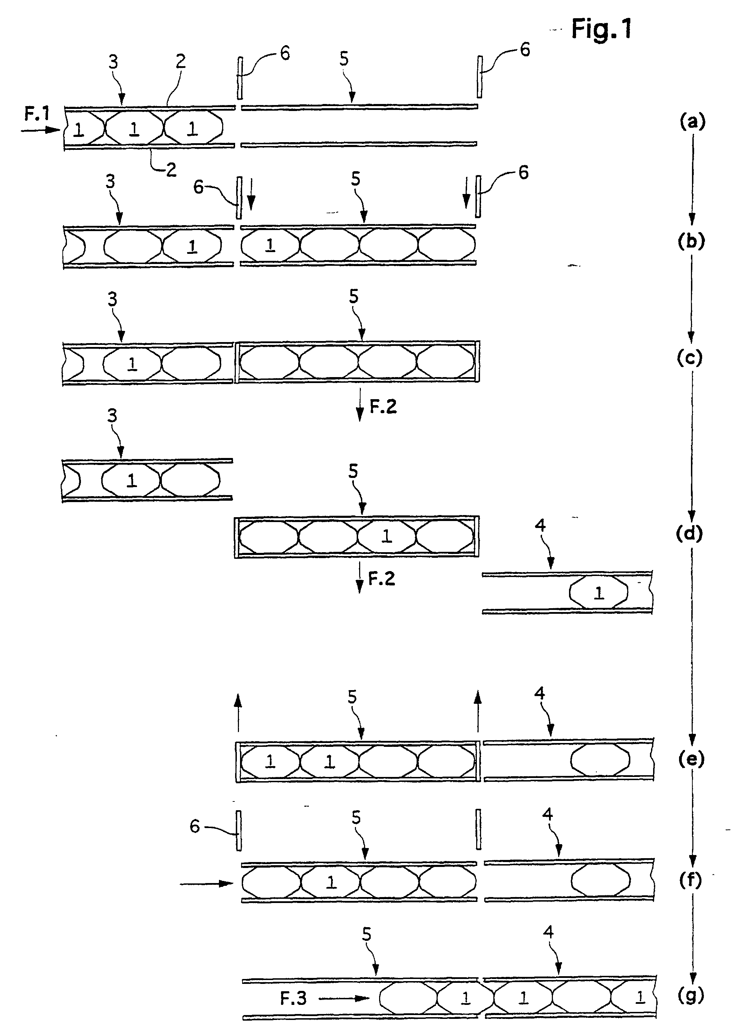

**Figur 1** zeigt in einer sehr schematischen Art und Weise aufeinanderfolgende Verfahrensphasen (a) bis (g), die durchlaufen werden, wenn gemäss erfindungsgemässem Verfahren in einem Fördersystem mit Schienen und einer Mehrzahl von voneinander unabhängig auf den Schienen verfahrbaren Fördermitteln ein Wechsel von serieller Förderung zu paralleler Förderung und ein zweiter Wechsel zurück zu serieller Förderung durchgeführt wird.

Die Fördermittel 1 sind schematisch als einfache, in einem Schienenpaar oder Förderkanal 2 laufende Körper dargestellt. Es ist für die Erfindung nicht wesentlich, wie die Fördermittel in den Schienen geführt sind und laufen, und es ist auch nicht wesentlich, wie die Fördermittel zu fördernde Gegenstände halten.

Die Figur 1 zeigt zwei im wesentlichen stationäre Schienenstücke 3 und 4, durch die Förderrichtungen F.1 und F.3 der seriellen Förderung definiert sind, und ein im wesentlichen quer zu den Förderrichtungen F.1 und F.3 (Förder- oder Verschieberichtung F.2 der parallelen Förderung) verschiebbares Schienenstück 5. Ferner zeigt die Figur 1 Blockiermittel in Form eines Paars von Schienenabschlüssen 6, die relativ zum verschiebbaren Schienenstück 5 in eine offene Position und in eine geschlossene Position bringbar sind und die mit dem verschiebbaren Schienenstück in Verschieberichtung F.2 verschiebbar sind.

Verfahrensphase (a) zeigt das verschiebbare Schienenstück 5 in einer ersten Position, in der es mindestens auf seiner einen Seite an ein stationäres Schienenstück 3 anschliesst. In dieser ersten Position werden Fördermittel 1 in serieller Förderung (Förderrichtung F.1) über das stationäre Schienenstück 3 auf das verschiebbare Schienenstück 5 gefördert, beispielsweise, bis dieses voll ist (Verfahrensphase (b)). Dann werden die Fördermittel 1, die sich auf dem verschiebbaren Schienenstück 5 befinden, beispielsweise durch Verschliessen der beiden Enden des Schienenstücks mit Hilfe der Schienenabschlüsse 6 blokiert (Verfahrensphase (c)) und wird das verschiebbare Schienenstück 5 aus der ersten Position verschoben (Verfahrensphase (d)) in einer Richtung F.2, die mindestens in einer ersten Phase im wesentlichen quer zur Förderrichtung F.1 der seriellen Förderung gerichtet ist. Mindestens in einer letzten Phase der Parallelförderung wird das verschiebbare Schienenstück 5 wiederum in der Verschieberichtung F.2 in eine zweite Position verschoben, in der es wiederum, beispielsweise mit seinem anderen Ende an ein im wesentlichen stationäres Schienenstück 4 anschliesst (Verfahrensphase (e)). Die Fördermittel auf dem verschiebbaren Schienenstück 5 werden entblockiert, dadurch, dass die Schienenabschlüsse 6 in ihre geöffnete Stellung gebracht werden (Verfahrensphase (f)) und die Fördermittel 1 auf dem verschiebbaren Schienenstück 5 werden in Förderrichtung F.3 in serieller Förderung vom verschiebbaren Schienenstück 5 weggefördert (Verfahrensphase (g)).

Wie bereits oben angetönt, ist es denkbar, dass das verschiebbare Schienenstück 5 zwischen seiner Verschiebung aus der ersten Position und seiner Verschiebung in die zweite Position, welche beiden Verschiebungen im wesentlichen quer zu den Forderrichtungen F.1 und F.3 also quer zur Länge des verschiebbaren Schienenstücks 5 gerichtet sind, in verschiedenen Richtungen verschoben wird, beispielsweise auch parallel zu F.1 oder F.3. Es ist auch keine Bedingung, dass die Richtung der seriellen Förderung in der ersten Position (F.1) gleich ist wie oder parallel zur Richtung der seriellen Förderung (F.3) in der zweiten Position (F.3). In bevorzugten Ausführungsformen des erfindungsgemässen Verfahrens wird aber der grösste Teil der Verschiebung des verschiebbaren Schienenstücks 5 im wesentlichen senkrecht zu F.1/F.3 verlaufen und werden die beiden stationären Schienenstücke 3 und 4 und damit die beiden Forderrichtungen F.1 und F.3 im wesentlichen parallel zueinander oder auf der gleichen Linie verlaufen. Auf dem Verschiebeweg können gleichzeitig eine Mehrzahl von verschiebbaren Schienenstücken mit gleichen oder verschiedenen Abständen voneinander kontinuierlich oder taktweise gefördert werden oder sie können auch zeitweise stillstehen (beispielsweise für Pufferung oder Zwischenlagerung).

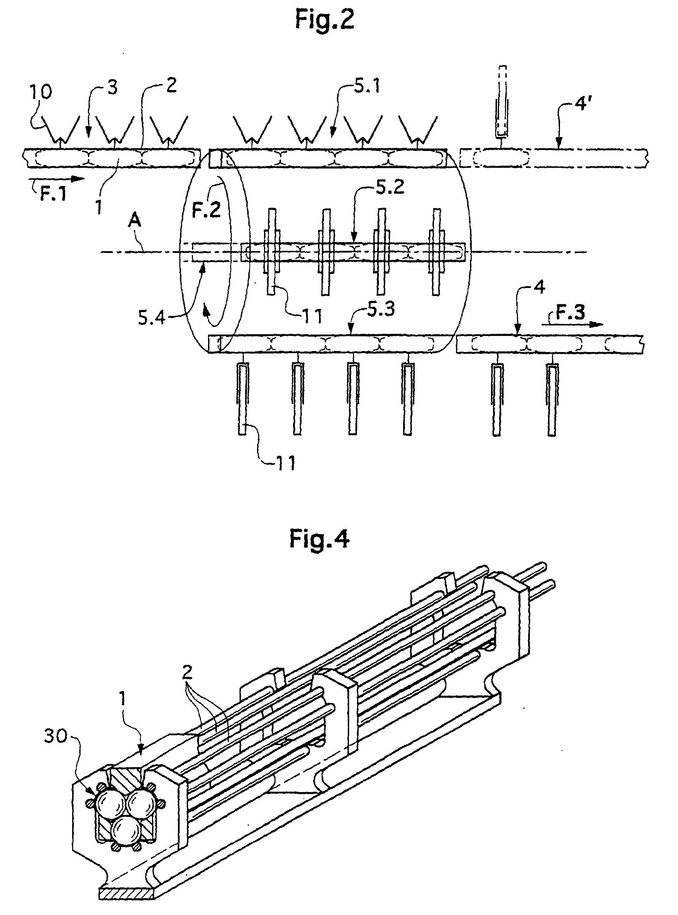

**Figur 2** zeigt denjenigen Teil einer beispielhaften Ausführungsform des erfindungsgemassen Fördersystems, der für einen Wechsel von serieller Förderung (Förderrichtung F.1) zu paralleler Förderung (Förderrichtung F.2) und zurück zu serieller Förderung (Förderrichtung F.3 oder F.1) dient. Fördermittel 1 werden entlang eines stationären Schienenstücks 3 seriell zugefördert, durch Verschiebung von vier verschiebbaren Schienenstüken 5.1 bis 5.4 in paralleler Förderung in einer Verschieberichtung F.2 weitergefördert, um schliesslich wieder in serielle Förderung in Förderrichtung F.3 (oder wieder F.1) entlang eines weiteren, stationären Schienenstücks 4 (oder 4') weggefördert zu werden.

Die auf den Schienen verschiebbaren Fördermittel 1 sind wiederum als in einem Schienenpaar oder Förderkanal 2 verfahrbare Körper dargestellt, die mit von den Schienen beabstandeten Haltemitteln 10 zum Ergreifen und Halten von Gegenständen 11 ausgerüstet sind. Die Parallelförderung dient im dargestellten, beispielhaften Anwendungsfalle einer parallelen Beladung der auf einem der verschiebbaren Schienenstücke (5.1 bis 5.4) blockierten Fördermittel mit Gegenständen 11.

Die vier verschiebbaren Schienenstücke 5.1 bis 5.4 sind auf einem kreisförmigen Verschiebeweg parallel zueinander und in gleichen Abständen voneinander angeordnet, derart, dass die Position eines Schienenstückes nach einem Verschiebeschritt von einem nachfolgenden Schienenstück eingenommen wird. Der Verschiebeweg verläuft auf einem Zylindermantel, dessen Rotationsachse parallel zu den Förderrichtungen F.1 und F.3 ausgerichtet ist.

Die erste Position der verschiebbaren Schienenstücke 5.1 bis 5.4 ist in der Figur 2 oben angeordnet. Fördermittel 1 mit leeren Haltemitteln 10 werden auf verschiebbare Schienenstücke 5.1 bis 5.4 geladen, die in dieser ersten Position positioniert sind. Durch eine Verschiebung der verschiebbaren Schienenstücke (Rotation um beispielsweise 90°) wird das beladene, verschiebbare Schienenstück in eine dritte Position gebracht, in der die Haltemittel 10 der blokierten Fördermittel 1 mit Gegenständen 11 beladen werden, und ein weiteres, verschiebbares Schienenstück wird in die erste Position gebracht. Aus der dritten Position wird das Schienenstück voll mit beladenen Fördermitteln in eine zweite Position gebracht, in der es an ein weiteres, stationäres Schienenstück 4 anschliesst. Die beladenen Fördermittel werden nach Entblockierung in serieller Förderung auf das Schienenstück 4 gefördert.

Wie in der Figur 2 strichpunktiert dargestellt, ist es auch möglich, dass die erste und die zweite Position und die beiden Förderrichtungen F.1 und F.3 identisch sind, dass also beide Enden eines in dieser Position positionierten, verschiebbaren Schienenstücks 5.1 bis 5.4 an ein stationäres Schienenstück 3 und 4' anschliessen und die beladenen Fördermittel 1 auf das stationäre Schienenstück 4' gefördert werden, indem sie durch auf dem stationären Schienenstück 3 zugeförderte, unbeladene Fördermittel weggeschoben werden.

Selbstverständlich ist das in der Figur 2 dargestellte Fördersystem nicht nur für das parallele Beladen von Fördermitteln mit Gegenständen, wie es in der Figur 2 dargestellt ist, anwendbar sondern in gleicher Weise auch für eine parallele Bearbeitung von Gegenständen in mindestens einer dritten Position. Es können auch Beladen, Bearbeiten und/oder Entladen von Gegenständen in aufeinanderfolgenden dritten Positionen alle während der gleichen parallelen Förderung durchgeführt werden.

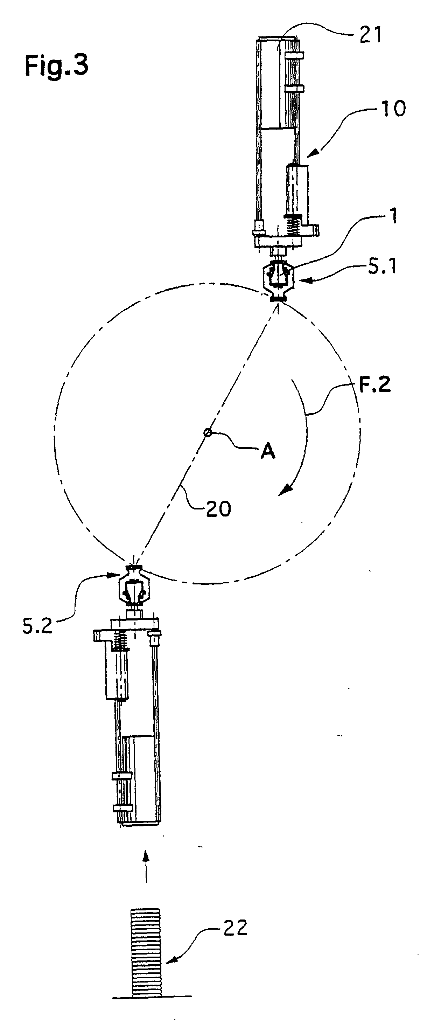

**Figur 3** zeigt mit Blickwinkel parallel zur Richtung der seriellen Förderung einen Teil einer weiteren, beispielhaften Ausführungsform des erfindungsgemässen Fördersystems. Es handelt sich wiederum um den Systemteil, der zum Wechsel von serieller zu paralleler Förderung und zurück zu serieller Förderung dient. Die verschiebbaren Schienenstücke 5.1 und 5.2 sind, wie die Schienenstücke 5.1 bis 5.4 der Figur 2 um eine Rotationsachse A auf einem kreisförmigen Verschiebeweg verschiebbar angeordnet. Die Schienenstücke sind dabei an mittig drehbar gelagerten Drehhebeln 20 angeordnet.

Die Fördermittel 1 sind wiederum mit Haltemitteln 10 ausgerüstet, welche Haltemittel 10 zum Halten von zylindrischen Behältern 21 ausgebildet sind. Die Fördermittel werden beispielsweise in der oberen Position (erste und zweite Position) seriell zugefördert und weggefördert und werden in der unteren Position (dritte Position) gefüllt, indem Stapel 22 von Artikeln (beispielsweise Biskuits) in die gegen unten offenen Behälter geschoben und entsprechende Deckel darauf gedrückt werden.

**Figur 4** zeigt eine beispielhafte Ausführungsform für Schienen 2 und Fördermittel 1 für das erfindungsgemässe Fördersystem. Die Fördermittel 1 weisen je mindestens eine Dreiergruppe 30 von Kugeln auf, die auf sechs käfigartig angeordneten parallelen Schienen 2 laufen. Die Fördermittel 1 ragen zwischen zwei der Schienen aus dem Käfig und tragen an dieser Stelle nicht dargestellte Haltemittel, die für eine spezifische Anwendung ausgebildet sind. Die dargestellten Schienen 2 und Fördermittel 1 eignen sich sehr gut für das erfindungsgemässe Verfahren, weil eine Förderung der Fördermittel 1 in verschiedenen Lagen relativ zu den Schienen 2 möglich ist und weil es einfach möglich ist, verschiebbare Schienenstücke und Übergänge zwischen verschiebbaren Schienenstücken und stationänen Schienenstücken zu realisieren. Dieses Fördersystem und Teile davon sind in den weiter oben bereits zitierten Publikationen derselben Anmelderin beschrieben.

In der obigen Beschreibung des erfindungsgemässen Verfahrens und des erfindungsgemässen Fördersystems sind keine konstruktiven Details enthalten, da diese sehr stark von den Charakteristiken der verwendeten Schienen und Fördermittel abhängig sind und da es für einen Fachmann, der das Prinzip aus der Beschreibung entnommen hat, ohne weiteres möglich ist, das erfindungsgemässe Fördersystem entsprechend zu realisieren.

## Patentansprüche

1. Verfahren zum Wechseln zwischen serieller Förderung und paralleler Förderung in einem Fördersystem mit schienenartigen Führungsmitteln (2) und mit einer Mehrzahl von entlang der Führungsmittel (2) unabhängig voneinander verfahrbaren Fördermitteln (1), die zum Halten von Gegenständen (11) ausgerüstet sind, **dadurch gekennzeichnet, dass** für einen Wechsel von serieller zu paralleler Förderung ein verschiebbares Schienenstück (5, 5.1-5.4) in eine erste Position gebracht wird, in der das verschiebbare Schienenstück (5, 5.1-5.4) an ein im wesentlichen stationäres Schienenstück (3) anschliesst, eine maximal mögliche Zahl von Fördermitteln (1) durch serielle Förderung über das stationäre Schienenstück (3) auf das verschiebbare Schienenstück (5, 5.1-5.4) gefördert und auf dem verschiebbaren Schienenstück (5, 5.1-5.4) in definierten Positionen blockiert wird und das verschiebbare Schienenstück (5, 5.1-5.2) mit den darauf blockierten Fördermitteln (1) im wesentlichen quer zu seiner Länge verschoben wird, dass das verschiebbare Schienenstück (5, 5.1-5.4) in mindestens einer zweiten Position positioniert wird, in welcher zweiten Position Fördermittel (1) mit Gegenständen (11) beladen, von Fördermitteln (1) gehaltene Gegenstände (11) bearbeitet und/oder Gegenstände von Fördermitteln geladen werden, und dass für einen Wechsel von paralleler zu serieller Förderung das verschiebbare Schienenstück (5, 5.1-5.4) im wesentlichen quer zu seiner Länge in eine dritte Position, in der es an ein weiteres, im wesentlichen stationäres Schienenstück (4) anschliesst, verschoben wird und die Fördermittel (1) auf dem verschiebbaren Schienenstück (5.5.1-5.4) entblockiert und in serieller Förderung vom verschiebbaren Schienenstück (5, 5.1-5.4) über das weitere Schienenstück (4) weggefördert werden.

2. Verfahren nach Anspruch 1, **dadurch gekennzeichnet, dass** eine Mehrzahl von im wesentlichen parallel zueinander angeordneten, verschiebbaren Schienenstücken (5.1-5.4) vorgesehen wird und dass bei der Verschiebung eines der verschiebbaren Schienenstücke aus der ersten in die zweite Position ein weiteres verschiebbares Schienenstück von der zweiten in die dritte Position und ein weiteres verschiebbares Schienenstück von der dritten in die erste Position verschoben wird.

3. Verfahren nach Anspruch 2, **dadurch gekennzeichnet, dass** die verschiebbaren Schienenstücke zwischen der ersten Position und der dritten Position im wesentlichen hintereinander angeordnet sind und mit gleichen oder verschiedenen Abständen voneinander kontinuierlich oder getaktet gefördert werden oder zeitweise stillstehen.

4. Verfahren nach einem der Ansprüche 1 bis 3, **dadurch gekennzeichnet, dass** die erste Position und die dritte Position des verschiebbaren Schienenstücks (5) oder der verschiebbaren Schienenstücke (5.1-5.4) identisch sind und dass das verschiebbare Schienenstück oder die verschiebbaren Schienenstücke auf einem in sich geschlossenen Verschiebeweg verschoben werden.

5. Verfahren nach Anspruch 4. **dadurch gekennzeichnet, dass** auf dem in sich geschlossenen Verschiebeweg eine Zahl von verschiebbaren Schienenstücken (5.1-5.4) im wesentlichen hintereinander verschoben werden, wobei die genannte Zahl der Zahl von ersten, zweiten und dritten Positionen entspricht.

6. Verfahren nach einem der Ansprüche 1 bis 5, **dadurch gekennzeichnet, dass** die Fördermittel (1) in derselben Förderrichtung (F.1) auf das verschiebbare Schienenstück (5, 5.1-5.4) gefördert und vom verschiebbaren Schienenstück (5, 5.1-5.4) weggefördert werden.

7. Verfahren nach einem der Ansprüche 1 bis 6, **dadurch gekennzeichnet, dass** mit Hilfe der Fördermittel (1) Behälter (21) gehalten gefördert werden, welche Behälter (21) in einer zweiten Position gefüllt und verschlossen werden.

8. Fördersystem mit schienenartigen Führungsmitteln (2) und mit einer Mehrzahl von entlang der Führungsmittel (2) unabhängig voneinander verfahrbaren Fördermitteln (1), die mit Mitteln (10) zum Halten von Gegenständen (11) ausgerüstet sind, **dadurch gekennzeichnet, dass** das Fördersystem für einen Wechsel von serieller zu paralleler Förderung und umgekehrt ein verschiebbares Schienenstück (5, 5.1-5.4) aufweist, das derart mit Blockiermitteln (6) ausgerüstet ist, dass eine maximal mögliche Zahl von Fördermitteln (1) auf dem verschiebbaren Schienenstück (5, 5.1-5.4) in definierten Positionen blockierbar ist und das mit darauf blockierten Fördermitteln (1) durch Verschiebung im wesentlichen quer zu seiner Länge in eine erste, in mindestens eine zweite und eine dritte Position bringbar ist, wobei das verschiebbare Schienenstück in der ersten und dritten Position an ein im wesentlichen stationäres Schienenstück (3) anschliesst und wobei in der mindestens einen zweiten Position Mittel zum Beladen von Fördermitteln (1) mit Gegenständen (11), Mittel zum Entladen von Gegenständen (11) ab Fördermitteln und/oder Mittel zur Bearbeitung von durch Fördermittel gehaltene Gegenstände vorgesehen sind.

9. Fördersystem nach Anspruch 8, **dadurch gekennzeichnet, dass** eine Mehrzahl von im wesentlichen parallel zueinander angeordneten und simultan miteinander bewegbaren, verschiebbaren Schienenstüke (5.1-5.4) vorgesehen ist.

10. Fördersystem nach Anspruch 9, **dadurch gekennzeichnet, dass** die verschiebbaren Schienenstücke (5.1-5.4) auf einem in sich geschlossenen Verschiebeweg verschiebbar sind.

11. Fördersystem nach Anspruch 10, **dadurch gekennzeichnet, dass** der in sich geschlossene Verschiebeweg eine Position aufweist, in der ein verschiebbares Schienenstück (5.1-5.4) auf seinen beiden Seiten an ein im wesentlichen stationäres Schienenstück (3,4') anschliesst.

12. Fördersystem nach Anspruch 11, **dadurch gekennzeichnet, dass** die verschiebbaren Schienenstücke (5.1-5.4) um eine Rotationsachse (A) rotierend antreibbar sind, von welcher Rotationsachse (A) sie gleich beabstandet und zu welcher Rotationsachse (A) sie parallel angeordnet sind.

13. Fördersystem nach einem der Ansprüche 8 bis 12, **dadurch gekennzeichnet, dass** die schienenartigen Führungsmittel (2) sechs käfigartig und parallel zueinander angeordnete Schienen sind und dass die Fördermittel (1) je mindestens eine Dreiergruppe (30) von Kugeln aufweisen, wobei die Dreiergruppen (30) von Kugeln derart angeordnet sind, dass bei der Förderung je eine Kugel auf zwei benachbarten Schienen abrollt.

## Claims

1. Method for the changeover between serial conveyance and parallel conveyance in a conveying system comprising rail-like guide means (2) and a plurality of conveying means (1) independently movable along the guide means (2) and equipped for holding objects (11), **characterized in that** for a changeover from serial to parallel conveyance, a displaceable rail element (5, 5.1-5.4) is brought into a first position, in which the displaceable rail element (5, 5.1-5.4) connects with an essentially stationary rail element (3), a maximum possible number of conveying means (1) is conveyed in series along the stationary rail element (3) onto the displaceable rail element (5, 5.1-5.4) and is blocked in a defined position on the displaceable rail element (5, 5.1-5.4) and the displaceable rail element (5, 5.1-5.2) with the conveying means (1) blocked on it is displaced in essence transverse to its length, that the displaceable rail element (5, 5.1-5.4) is positioned in at least one second position in which the conveying means (1) are loaded with objects, objects held by conveying means are processed and/or objects are unloaded from conveying elements, and that for a changeover from parallel to serial conveyance, the displaceable rail element (5, 5.1-5.4) is displaced essentially transverse to its length into a third position, in which it connects with a further, in essence stationary rail element (4), the conveying means (1) are unblocked on the displaceable rail element (5, 5.1-5.4) and are conveyed in series off the displaceable rail element (5, 5.1-5.4) to the further rail element (4).

2. Method according to claim 1, **characterized in that** a plurality of displaceable rail elements (5.1 - 5.4) arranged substantially in parallel is provided and that during the displacement of one of the displaceable rail elements from the first position to the second position a further displaceable rail element is displaced from the second into the third position and an even further displaceable rail element is displaced from the third position into the first position.

3. Method in accordance with claim 2, **characterized in that**, between being positioned in the first position and in the third position, the displaceable rail elements are arranged essentially one behind the other with the same or with a different spacing between one another and are conveyed continuously or in cycles or with intermittent standstills.

4. Method according to one of claims 1 to 3, **characterized in that** the first position and the third position of the displaceable rail element (5) or of the displaceable rail elements (5.1-5.4) are identical and that the displaceable rail element or the displaceable rail elements are displaced along a closed in itself displacement path.

5. Method in accordance with claim 4, **characterized in that** on the closed in itself displacement path a number of displaceable rail elements (5.1-5.4) is displaced essentially one behind the other, wherein said number corresponds to the number of first, second and third positions.

6. Method according to one of claims 1 to 5, **characterized in that** the conveying means (1) are conveyed onto the displaceable rail element (5, 5.1-5.4) and off the displaceable rail element (5, 5.1-5.4) in the same conveying direction (F.1).

7. Method in accordance with one of claims 1 to 6, **characterized in that** the conveying means (1) convey in a held manners containers (21), which containers (21) are filled and closed in a third position.

8. Conveying system comprising rail-like guide means (2) and a plurality of conveying means (1) movable independently of one another along the rail-like guide means (2) and equipped with means for holding objects (11), **characterized in that**, for changing over from serial to parallel conveyance and vice versa, the conveying system further comprises a displaceable rail element (5, 5.1-5.4) being equipped with blocking means (6) such that a maximum number of conveying means (1) can be blocked in defined positions on the displaceable rail element (5, 5.1-5.4) and being displaceable together with the conveying elements (1) blocked on it essentially transverse to its length into a first, at least one second and a third position, wherein in the first and in the second position, the displaceable rail element connects with an in essence stationary rail element (3, 4), and wherein in the at least one second position, means for loading conveying elements (1) with objects (11), means for unloading objects (11) from conveying means (1) and/or means for processing objects held by conveying means are provided.

9. Conveying system in accordance with claim 8, **characterized in that** a plurality of displaceable rail elements (5.1-5.4) arranged parallel to one another and being simultaneously displaceable is provided.

10. Conveying system according to claim 9, **characterized in that** the displaceable rail elements (5.1-5.4) are displaceable along a closed in itself displacement path.

11. Conveying system in accordance with claim 10, **characterized in that** the closed in itself displacement path comprises a position, in which a displaceable rail element (5.1-5.4) connects on both sides with an essentially stationary rail element (3, 4').

12. Conveying system according to claim 11, **characterized in that** the displaceable rail elements (5.1-5.4) are driven in rotation around a rotation axis (A), from which rotation axis (A) they all have the same distance and to which rotation axis (A) they are arranged in parallel.

13. Conveying system according to one of claims 8 to 12, **characterized in that** the rail-like guide means (2) comprise six parallel rails in a cage-like arrangement and that each conveying means (1) comprises at least one group (30) of three balls, wherein the groups (30) of three balls are arranged in such a manner, that during conveyance each one of the three balls rolls along two neighbouring rails.

## Revendications

1. Procédé pour changer entre transport sériel et transport parallèle dans un système de transport comprenant des moyens de guidage (2) du type rails et une pluralité de moyens de transport (1) qui peuvent se déplacer indépendamment les uns des autres le long des moyens de guidage (2) et sont équipés pour tenir des objets (11), **caractérisé en ce que**, pour un changement du transport sériel au transport parallèle, un tronçon de rail mobile (5, 5.1 à 5.4) est amené dans une première position dans laquelle il fait suite à un tronçon de rail essentiellement fixe (3), un nombre maximal possible de moyens de transport (1) est transporté par transport sériel, par l'intermédiaire du tronçon de rail fixe (3), sur le tronçon de rail mobile (5, 5.1 à 5.4) et est bloqué sur le tronçon de rail mobile (5, 5.1 à 5.4) dans des positions définies et le tronçon de rail mobile (5, 5.1 à 5.2) avec les moyens de transport (1) bloqués dessus est déplacé essentiellement dans le sens transversal à sa longueur, que le tronçon de rail mobile (5, 5.1 à 5.4) est positionné dans au moins une deuxième position, dans laquelle des moyens de transport (1) sont chargés avec des objets (11), des objets (11) tenus par des moyens de transport (1) sont traités et /ou des objets sont chargés par des moyens de transport, et que, pour un changement du transport parallèle en transport sériel, le tronçon de rail mobile (5, 5.1 à 5.4) est déplacé essentiellement dans le sens transversal à sa longueur et amené dans une troisième position dans laquelle il fait suite à un autre tronçon de rail essentiellement fixe (4), et les moyens de transport (1) sur le tronçon de rail mobile (5, 5.1 à 5.4) sont débloqués et sont évacués en transport sériel du tronçon de rail mobile (5, 5.1 à 5.4) par l'intermédiaire de l'autre tronçon de rail (4).

2. Procédé selon la revendication 1, **caractérisé en ce qu'**il est prévu une pluralité de tronçons de rails mobiles (5.1 à 5.4), disposés essentiellement parallèlement les uns aux autres, et que lors du déplacement d'un des tronçons de rails mobiles de la première à la deuxième position, un autre tronçon de rail mobile est déplacé de la deuxième à la troisième position et un autre tronçon de rail mobile de la troisième à la première position.

3. Procédé selon la revendication 2, **caractérisé en ce que** les tronçons de rail mobiles sont disposés essentiellement les uns derrière les autres entre la première position et la troisième position et sont transportés en continu ou en cadence avec des écarts entre eux identiques ou différents ou s'arrêtent par intermittence.

4. Procédé selon l'une quelconque des revendications 1 à 3, **caractérisé en ce que** la première position et la troisième position du tronçon de rail mobile (5) ou des tronçons de rails mobiles (5.1 à 5.4) sont identiques et que le tronçon de rail mobile ou les tronçons de rails mobiles sont déplacés sur un trajet de déplacement fermé en soi.

5. Procédé selon la revendication 4, **caractérisé en ce que**, sur le trajet de déplacement fermé en soi, un certain nombre de tronçons de rails mobiles (5.1 à 5.4) sont déplacés essentiellement les uns derrière les autres, le nombre cité correspondant au nombre des premières, deuxièmes et troisièmes positions.

6. Procédé selon l'une quelconque des revendications 1 à 5, **caractérisé en ce que** les moyens de transport (1) sont transportés sur le tronçon de rail mobile (5, 5.1 à 5.4) et sont évacués du tronçon de rail mobile (5, 5.1 à 5.4) dans la même direction de transport (F.1).

7. Procédé selon l'une quelconque des revendications 1 à 6, **caractérisé en ce que** des conteneurs (21), qui sont remplis et fermés dans une deuxième position, sont transportés tenus à l'aide des moyens de transport (1).

8. Système de transport comprenant des moyens de guidage du type rails (2) et une pluralité de moyens de transport (1) qui peuvent se déplacer indépendamment les uns des autres le long des moyens de guidage (2) et sont équipés de moyens (10) pour tenir des objets (11), **caractérisé en ce que** le système de transport présente, pour un changement de transport sériel en transport parallèle et inversement, un tronçon de rail mobile (5, 5.1 à 5.4) qui est équipé de moyens de blocage (6), de façon qu'un nombre maximal possible de moyens de transport (1) puisse être bloqué dans des positions définies sur le tronçon de rail mobile (5, 5.1 à 5.4) et qui peut être amené, avec des moyens de transport (1) bloqués dessus, par déplacement essentiellement dans le sens transversal à sa longueur dans une première, au moins une deuxième et une troisième position, le tronçon de rail mobile faisant suite, dans la première et la troisième position, à un tronçon de rail essentiellement fixe (3) et, dans la deuxième position au moins, des moyens pour charger des moyens de transport (1) avec des objets (11), des moyens pour décharger des objets (11) de moyens de transport et/ou des moyens pour traiter des objets tenus par des moyens de transport sont prévus.

9. Système de transport selon la revendication 8, **caractérisé en ce qu'**il est prévu une pluralité de tronçons de rails (5.1 à 5.4) mobiles, disposés essentiellement parallèlement les uns aux autres et mobiles simultanément les uns avec les autres.

10. Système de transport selon la revendication 9, **caractérisé en ce que** les tronçons de rails mobiles (5.1 à 5.4) peuvent se déplacer sur un trajet de déplacement fermé en soi.

11. Système de transport selon la revendication 10, **caractérisé en ce que** le trajet de déplacement fermé en soi présente une position dans laquelle un tronçon de rail mobile (5.1 à 5.4) fait suite, sur ses deux côtés, à un tronçon de rail essentiellement fixe (3, 4').

12. Système de transport selon la revendication 11, **caractérisé en ce que** les tronçons de rail mobiles (5.1 à 5.4) peuvent être entraînés de manière à pouvoir tourner autour d'un axe de rotation (A) duquel ils sont éloignés d'une même distance et auquel ils sont parallèles.

13. Système de transport selon l'une quelconque des revendications 8 à 12, **caractérisé en ce que** les moyens de guidage du type rails (2) sont six rails disposés en forme de cage et parallèles les uns aux autres et que les moyens de transport (1) présentent chacun au moins une triade (30) de boules, les triades (30) étant disposées de façon que, lors du transport, chaque boule roule sur deux rails voisins.
